# EUROPEAN PATENT SPECIFICATION

(11) **EP 3 250 046 B1**
(45) Date of publication and mention of the grant of the patent: **04.12.2019**
(21) Application number: 16742881.2
(22) Date of filing: 14.01.2016
(51) Int. Cl.: A23G 9/00, A23G 9/10, A23G 9/22, A23G 9/28

(54) **APPARATUS FOR PREPARING ICE CREAM AND LIKE FROZEN PRODUCTS**
VORRICHTUNG ZUR HERSTELLUNG VON SPEISEEIS UND ÄHNLICHEN GEFRORENEN PRODUKTEN
APPAREIL DE PRÉPARATION DE CRÈME GLACÉE ET DE PRODUITS CONGELÉS SIMILAIRES

(30) Priority: 29.01.2015 IL 23700415
(43) Date of publication of application: 06.12.2017
(73) Proprietor: Milk Cream Ltd., 35414 Haifa (IL)
(72) Inventor: KATZ, Abraham, 49379 Petach Tikva (IL)
(74) Representative: Rondano, Davide
(86) International application number: PCT/IL2016/050038
(87) International publication number: WO 2016/120861

(56) References cited:
- WO-A1-99/03358
- GB-A- 388 726
- GB-A- 530 773
- GB-A- 543 221
- JP-A- S 568 650
- US-A1- 2006 263 490
- US-A1- 2008 282 723

## Description

### FIELD OF THE INVENTION

The present invention is defined by the claims and relates to an apparatus and method for preparing and dispensing frozen yogurt, sherbet and ice cream. In particular, the invention relates to a vessel and scraper for ice cream making machines that are suitable for use in apparatus of different sizes for preparing either, small, medium or large size batches of ice cream, sherbet or yogurt. The invention also relates to a method of making ice cream, sherbet and yogurt in a short time and of exceptional quality.

### BACKGROUND OF THE INVENTION

Manufacture of ice cream involves several phases, each of which contributes to the quality of the product. These phases include pasteurization, homogenization, whipping, and controlled freezing. Essentially ice cream is the product of a pasteurized, homogenized, milk fat composition, which is whipped in the presence of air and frozen simultaneously at a controlled temperature.

The basic ingredients in ice cream consist of milk or vegetable fat, non-fat milk or vegetable solids, a sweetener such as sugar, and a stabilizer and/or emulsifier. These ingredients are pasteurized and homogenized together into what is called an ice cream "mix". Non-dairy ice cream is made with vegetable fats including tofu. There are also available pre-mixed powder compositions to which only water is added, and by freezing and whipping them they form ice cream. To make ice cream, the mix is placed in a container such as a cylinder provided with a scraper. The cylinder and scraper are rotated in opposite directions in the presence of air and cooled, and air gets whipped into the mix. The scraper scrapes the mix from the wall of the container and forces it back into the middle, while air is constantly being whipped into the freezing composition. To the basic ice cream mix there is usually added either before or during freezing, some flavoring, coloring and/or pieces of fruit and/or nuts.

The amount of air incorporated into the freezing mixture is defined in terms of overrun, i.e. the increase in volume due to the incorporation of whipped air. Thus for example, if the volume of the mixture is doubled by the introduction of air, the composition has a 100% overrun. Generally, ice cream made in batch form has an overrun of 15-25%. The scraper, by removing the ice cream from the walls and pushing it to the middle of the container, aids in the whipping process. The temperature for preparing ice cream is generally about -5°C. Freshly prepared ice cream has about one third to one half of its water content in the form of ice, while upon storage, about 90% of the water converts to ice. Ice cream is therefore most palatable and creamy when it is consumed at -5° C, just as it comes from the ice cream machine that prepares it.

Ice cream, however, is generally sold in bulk as hardened ice cream that was previously prepared and frozen for storage. This ice cream is dispensed by scooping out portions as required. Such ice cream, however, has lost much of its creamy fresh texture and palatability by the time it reaches the consumer due to crystallization and oxidation. Moreover, if one is interested in having a choice of ice cream flavors, one would have to purchase as many packs of ice cream as flavors desired. This requires significant freezer space for storing the ice cream. Alternatively one can suffice with the choice of flavors provided in prepackaged multi-flavor ice creams. There are of course machines that make ice creams, custards and yogurts continuously that are dispensable as single portions individually from a spigot in the machine. Such machines, however, are for use in ice cream parlors since they are relatively large, and are unsuitable as household utensils.

A number of patents disclose ice cream making apparatus specifically for household use.

U.S. Patent No. 3,952,538 discloses a home ice cream making machine using a stationary shaft and dasher associated with a cover, which must be on while the ice cream is being made. This patent relates to making family size portions.

U.S. Patent No. 4,441,334 discloses an ice cream machine with a center agitator for domestic use, placed in a counter top of a cabinet. This machine is also designed to make family size batches.

U.S. Patent No. 5,022,315 discloses a two pot small household utensil that can be used for making ice cream. Each pot of the utensil is provided with a stirrer comprising a vertical drive shaft from which extend two stirring arms. The drive shaft is centered with respect of the pot.

U.S. Patent No. 5,549,042 discloses a domestic appliance for making ice-cream comprising a motor, a stirring tool, switching means for starting a first mode of operation and a further mode of operation of the domestic appliance, and a time control device, which limits the operation time of the modes of operation.

U.S. Patent No. 6,510,704 describes a single and dual transferable battery-operated ice cream maker to be used in the freezer compartment of any domestic or commercial refrigerator and/or ice chest. The ice cream maker includes product containers into which the ice cream ingredients are placed, a timer-controlled creamer for stirring the ingredients, a motorized lid connected to the creamer, a temperature sensor making contact with the product container, a container housing where the product containers and cooling mechanisms are located, an audible means to indicate completion of process, and a storage lid to cover the product container.

U.S. Patent No. 6,868,687 describes an ice cream machine including an ice cream preparation unit and an ice cream display cabinet. The ice cream preparation unit includes an ingredient inlet, ice cream preparation unit and an ice cream outlet; and the ice cream display cabinet includes refrigeration unit and is designed for refrigerating ice cream in one or more ice cream containers.

U.S. Patent No. 7,878,021 describes an ice-cream maker including a blade arranged in a double-walled container, and a housing containing a driving mechanism that can generate a blade-rotating movement in relation to the double-walled container. The double-walled container is composed of an external wall and an internal wall defining a housing containing a phase changing mixture having a fusion range extending at least partially below 0°C.

In US 5,680,769, there is disclosed an apparatus and method for making multiple separate individual portions of fresh frozen yogurt or ice cream. WO 99/03358 A1 discloses an apparatus and a method for preparing and dispensing frozen yogurt and ice cream on a commercial scale in the form of fresh individually prepared portions for consumption shortly after preparation.

Additional related publications include the following: US 2008/282723; GB 388,726; GB 543,221; US 1,610,626; US 2,599,021; US 2,608,833; US 3,626,709; US 3,797,268; US 4,974,965; and US 5,117,649.

The apparatus of the present invention is an improvement that gives better results and has a much broader range of applications.

### SUMMARY OF THE INVENTION

It is an object of the present invention to provide an apparatus for instantly making and dispensing fresh frozen yogurt, sherbet or ice cream of superior quality. The invention is defined by the claims.

Another object of the present invention is to provide an apparatus for making fresh frozen yogurt, sherbet or ice cream having a high overrun of up to 40% in a very short time.

A further object of the invention is to provide a household apparatus for easily preparing fresh frozen yogurt, sherbet or ice cream in single or family size portions.

A still further object of the invention is to provide an apparatus for preparing individual portions of ice cream, sherbet or yogurt on a commercial scale.

A yet further object of the invention is to provide an apparatus for preparing ice cream, sherbet or yogurt on an industrial scale.

It is another object of the invention to provide a vessel for making ice cream, sherbet or yogurt.

A further object of the invention is to provide an improved scraper for an ice cream making vessel.

Still another object is to provide a vessel and scraper combination for ice cream making machines.

Yet another object of the invention is to provide a method for making freshly prepared frozen yogurt sherbet or ice cream quickly and of superior quality.

A still further object of the present invention is to provide a method for making fresh frozen yogurt sherbet or ice cream having a high overrun of up to 40% in a very short time.

In accordance with this invention there is provided an apparatus for making frozen yogurt, sherbet and ice cream, comprising:
a housing having a counter top with at least one aperture,
at least one heat exchanger vessel positioned in said aperture for rotation therein, said vessel comprising coupling means at its exterior bottom, wherein the interior bottom of the vessel comprises adjacent curved U-shaped troughs having a center peak between them,
a cooling medium within the housing and surrounding the vessel,
a motor for coupling to said coupling means and for rotating the vessel within the housing,
a single scraper blade fixedly mounted on the housing and extending into the vessel, wherein the scraper blade has a J shape with a straight vertical portion thereof extending into the vessel alongside the wall of the vessel and the bottom portion of the single scraper blade curves and ends along the interior bottom of the vessel as the curvature of the bottom trough, and wherein the straight vertical portion of the scraper blade has an irregular triangular cross section and the bottom curved portion of the scraper blade has a right trapezoidal cross section.

The apparatus may have built-in or resting on the counter top trays with different flavors, colors, syrups, fruits, nuts and/or chocolate chips that can be added to the frozen yogurt, sherbet and ice cream.

The vessel and scraper configuration as defined above provides superior mixing and whipping of the contents of the vessel, when rotated, particularly at relatively high speed of between 20 to 300 rpm, and preferably between 50 to 300 rpm. Ice cream is thus prepared very quickly, and can be prepared as individual portions in about 2 to 3 minutes or less and in some instances even within 1 minute with a high overrun in the order of 20-40%. The mass in the vessel is efficiently scraped off the wall and pushed to the bottom center where it is further turned over when thrown against the center peak, allowing air to be whipped into the mass, giving a very high overrun without blowing in any outside air.

In one embodiment, the outer surface of the vessel wall has multiple baffles giving outer walls a wavy appearance. This provides the vessel with a larger surface area in contact with the cooling medium, and thus faster cooling. The cooling medium can be a liquid, such as propylene glycol-water or gas circulating through coiled tubes around the vessel such as is known for refrigerators and freezers, preferably approved by the NSF (National Sanitation Foundation).

In another embodiment, the outer wall of the vessel comprises a spiral ledge or fins giving the appearance of a thread around the vessel. This configuration provides smoother flow and better circulation of cooling fluid to the vessel by virtue of the rotating threads cutting through the cooling fluid with the least resistance.

The vessel may comprise a thin wall, in the order of 1-4 mm, starting about 1/4 from the top where the ice cream is formed. In such a case, the thin wall of the vessel can be surrounded on the outside with a cooling jacket.

It a preferred embodiment, the coupling means at the bottom exterior of the vessel is easily engaged directly by the motor. This can be accomplished, inter alia, by means of a bayonet lock, snap fit, or other twist-lock mechanism, as known in the art.

In another embodiment the motor can be connected indirectly to the vessel via a transmission.

Although the vessel may be constructed from many materials, including rigid plastics, it is preferred that the vessel be made of conducting material, such as bronze, copper alloys, aluminum, stainless steel, chrome plated materials. It is most preferably constructed from chrome hardened stainless steel that is acceptable for use with foodstuff. Another possibility is to have a vessel that is lined with a thin metal sheet, a glass or plastic liner or fitted with a contoured cup, fitted into the vessel, which can easily be removed for cleaning or disposal.

The scraper is static and has a straight blade having a curved bottom and a blade support that is mounted on a counter top with the blade extending into the vessel. The straight part extends down along the inside wall of the vessel and the curved bottom part curves to conform to the radial curvature of the bottom half of the vessel. The scraper blade preferably comprises a rigid irregular triangular shaped cross section with a flat side positioned against the wall, so that when the vessel rotates, the mass is scraped off the wall and pushed into the center peak where it is further turned and whipped. All this time, atmospheric air is whipped into the churning mass, resulting in a high overrun. The scraper blade may also taper slightly along its length.

The scraper blade can be made from stainless steel, preferably hardened steel such as SS304, or metal alloys comprising copper, zinc with optionally another metal, acceptable for use with foodstuff. It may also be constructed from rigid engineering plastic material to assure rigidity and strength. The scraper and blade may also be constructed from two connected sections wherein the upper section is preferably made of steel and the lower blade section of an engineering plastic, such as polyoxymethylene (e.g. Delrin). The two sections are connected by means of a steel rod extending from the upper section that is mounted on a counter top through the center of the blade section to give it greater rigidity.

The cooling medium suitable for use with the apparatus of the invention may be any known cooling medium including dry ice or glycol based antifreeze fluids, preferably an NSF approved refrigerant. However, refrigeration gas circulating through coils or through a jacket is cleaner and is often preferred.

Ice cream is prepared with the apparatus of the invention in the following manner. The refrigeration system is activated, as is known in the art, to a temperature between -5°C and -30°C, preferably about -15°C. The desired ice cream ingredients are introduced into the vessel, either separately or in the form of a liquid or a dry mix and water where needed. The motor is turned on to rotate the vessel at a speed of between 20 and 300 rpm to cool its contents. The centrifugal force of the rotation throws the mix against the wall of the vessel. The scraper blade then scrapes the material off the wall and it falls to the bottom of the vessel over the curved blade and center peak creating a vortex in the mix while at the same time atmospheric air is whipped into the mix. To obtain 20% to 40 % overrun, no introduction of compressed air is necessary, since sufficient atmospheric air is forced into the mix by the action of the curved blade along the curved bottom of the rotating vessel. With the apparatus of this invention there is minimal if any, spatter of ice cream out of the vessel. To retrieve the ice cream, a collecting spoon, spatula or stick can be inserted into the rotating vessel opposite the scraper blade and the fresh ice cream builds up on the spoon, spatula or stick. Removing the spoon, spatula or stick leaves it with a thick layer of fresh ice cream with an overrun of 20% to 40%, which is greater than that of conventional ice creams. Alternatively, one can stop or slow down the rotation and scrape out the ice cream from the vessel.

In another embodiment, individual portions of ice cream-alcohol mixtures can be prepared. The procedure is the same as with pure ice cream, with the exception that an alcoholic beverage is added to the mix before whipping. The total alcohol content of such a mixture can be between 1-2%, and the alcohol is generally introduced the form of a liquor. Thus, alcohol containing portions of about 150cc can readily be prepared.

The apparatus and method of this invention are suitable for home units, commercial units and for industrial scale. For home units, a small apparatus with vessels having a capacity of 1/4 to 2 liters would be reasonable. Commercial units are described in US 5,680,769 and comprise housings with counters of about 4 to 10 vessels. For industrial use the vessels would generally have a capacity of 2 to 50 liters.

In a preferred embodiment of the invention, more than one vessel may be incorporated in a single housing utilizing the same cooling facility to make more than one batch at a time, possibly with different flavors. Commercial units with numerous vessels for preparing individual portions were claimed in the above mentioned patent.

Home units, in accordance with this invention, preferably contain one or two vessels, but may contain more.

### BRIEF DESCRIPTION OF THE DRAWINGS

The figures show preferred embodiments of the invention.
Figure 1 illustrates a commercial ice cream vending apparatus in accordance with the present invention;
Figure 2 is a top view of a counter top that is suitable for an ice cream vending machine as illustrated in Figure 1;
Figure 3 is a cross-sectional view of a vessel and a scraper in accordance with one embodiment of the present invention;
Figure 4 illustrates an apparatus in accordance with one embodiment of the present invention;
Figure 5 is a perspective cut view of another preferred embodiment of a vessel and scraper in accordance with the present invention;
Figure 6 is a side view of a scraper blade in accordance with the present invention;
Figures 6A and 6B are cross-sectional views of the scraper blade of Figure 6 along lines x-x and y-y, respectively; and

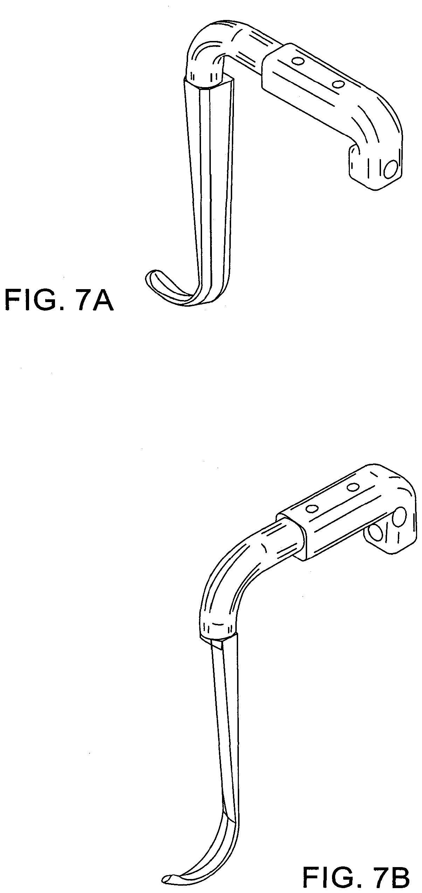

Figures 7A and 7B are perspective views of a scraper in accordance with a preferred embodiment of the present invention.

### DETAILED DESCRIPTION OF THE DRAWINGS

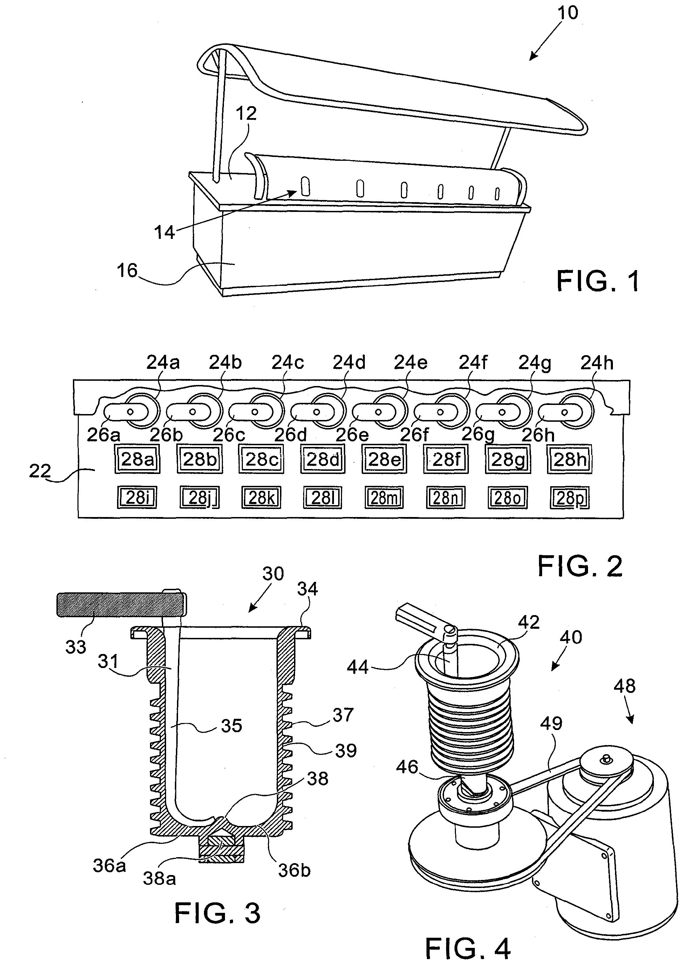

Referring now to Figure 1, there is shown an ice cream vending apparatus 10 with a counter top 12 and ice cream making apparatuses 14. Underneath the counter top 12 there is a housing 16 containing one or more motors (not shown), to rotate the apparatuses, and a circulating refrigeration facility to maintain a temperature of between -20°C to -30°C within the housing.

Figure 2 shows a counter top 22 containing eight ice cream making apparatuses. In the figure are seen vessels 24a-24h and scrapers 26a-26h. Trays 28a-28p can contain additions to the ice cream, such as fruits syrups, chocolate chips, etc.

Figure 3 is a cross sectional view of a round vessel 30 and scraper 32, in accordance with one embodiment of the invention. The vessel 30 has a smooth inner wall and is open at the top with a circumferential lip 34 that supports the vessel 30 within an aperture of a counter top (not shown). The bottom interior of the vessel is rounded in the shape of two U's 36a and 36b that meet at a center peak 38. Baffles 37 or thin fins (not shown) surround an outer wall 39 to provide more surface area for heat exchange. A scraper 31 comprises a support section 33, for mounting on a counter top, and a scraper blade 35 having a curved bottom. The curved bottom of the blade 35 is shaped to conform to the curve of the U shaped sections 36a, 36b. Coupling means, such as a socket 38a that can be quickly connected to a motor, such as by a bayonet, or snap fit connection, are provided at the exterior bottom of the vessel for coupling to a motor.

Figure 4 illustrates an apparatus 40, in accordance with one embodiment of the invention. The apparatus 40 comprises a vessel 42 and scraper 44. The bottom 46 of the vessel 42 is connected to a motor 48 for rotation via a transmission belt system 49. An electric refrigeration system is utilized to maintain a temperature of between -20°C to -30°C within the housing to circulate and cool the vessel to the desired temperature.

The apparatus of this invention can be operated by portable energy such as battery.

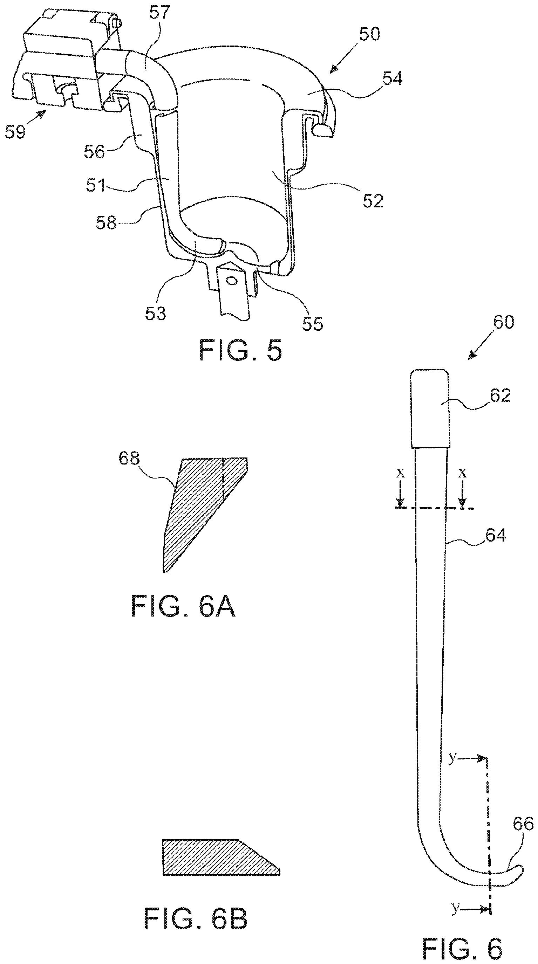

Figure 5 illustrates another embodiment of the present invention. There is shown a perspective cut view of a vessel 52 and scraper 50. The vessel 52 has an upper lip 54 and smooth inner wall. The upper wall section 56 is relatively thick in order to give support to the vessel 52. The lower 1/2 to 3/4 of the wall 58 is very thin, in the order of 0.6 mm to 3.0 mm, preferably between 0.8 mm to 2 mm, and most preferably between 0.9 mm to 1.2 mm. This allows better heat exchange for cooling the section of the vessel 52 where the ice cream is formed. The scraper 50 includes a shaft section 51 with a curved tip 53 that conforms to the U shaped trough that comprises the inner bottom 55 of the vessel 52. The scraper 50 also has a handle 57 that is releasably attached by means of a device 59 to a counter top (not shown).

Figure 6 is a side view of a scraper 60 in accordance with this invention. The scraper 60 is shown with part of a handle 62 from which extends a straight blade 64 that terminates in a curved tip 66. The curved tip 66 is designed to conform to the curvature of a U shaped trough that forms half of a bottom of the vessel used to make ice cream according to the present invention. The straight blade 64 has a cross-section, along line x-x, in the shape of an irregular triangle, as seen in figure 6A, and a different cross-section along y-y, in the shape of a right trapezoid, for the curved tip, as seen in figure 6B. A slightly curved side 68 shown in Figure 6A is the side of the blade that contacts the curved wall of the vessel 52, and preferably conforms to the same curvature.

In accordance with the present invention, an electric refrigeration unit is utilized to maintain a temperature of between -20°C to -30°C within the housing. In order to enable an optimal cooling, i.e., to maximize the cooling efficiency via conduction through the vessel content, the vessel wall is considerably thin, as stated earlier. A thin wall enables optimal cooling of the contents of the vessel with negligible energy loss.

The shaft of the scraper has at least one slightly curved side and is positioned adjacent to the slightly curved wall of the vessel leaving a small space between them, of approximately 0.1 mm, so that when the vessel rotates, the mass is scraped off the wall and pushed into the center peak where it is further turned and whipped.

The scraper can be made from rigid engineering plastic to assure rigidity and strength such as polyoxymethylene (e.g. Delrin), as well as from metal, preferably from stainless steel such as 304SS, which is acceptable for food processing. The blade may also be made of a first material and the handle of a second material. This may be useful when the need to replace parts arises.

Although the vessel may be constructed from many materials, including rigid plastics, it is preferred that the vessel be made of conducting material, such as bronze, copper alloys, aluminum, chrome-plated materials or stainless steel. Another possibility is to have the vessel lined with a thin metal, glass or plastic liner or cup fitted into the vessel in which the ice cream is made, which can easily be removed for cleaning or disposal.

The method for making ice cream, sherbet or yogurt with an apparatus of the invention as in Figure 1, is as follows. The ingredients for preparing the desired end product are introduced into the vessel with the fixed scraper attached to the countertop. A refrigeration unit maintains a temperature of between -20°C to -30°C around the vessel, within the housing, while the interior vessel temperature is approximately -5°C. The ingredients may be either pre-mixed or introduced into the vessel separately, and can include powder mixes, liquid such as milk or water, and solid pieces such as fruits and nuts or flavor extract such as chocolate, vanilla etc. The motor 86 is then turned on and the vessel 10 rotated within the housing at approximately 50 to 300 rpm while the scraper is kept fixed. The ingredients are forced against the inner wall surface of the vessel by centrifugal force and the blade scrapes the mass off the wall of the vessel, mixing the mass with air and forcing the mas to the bottom and center of the vessel, where the mass is further churned and whipped with air. In commercial apparatuses that prepare individual portions, frozen yogurt or ice cream is prepared in about 2 to 3 minutes. The product is very fresh with a high overrun of 20% to 40%, and has a deliciously creamy texture and taste unobtainable from stored frozen yogurt or ice cream. The mixture may at first be only a powder, a liquid or a slurry but it becomes a creamy mass as a result of the whipping as the vessel rotates.

Industrial units can prepare larger portions in about 8 to 15 minutes. Very large batches may require somewhat more time, but are still very fast and of higher quality compared to other methods.

The method only requires atmospheric air to obtain a high overrun. If additional air is forced into the mixture, it is even possible to obtain an overrun of 100%.

## Claims

1. An apparatus (14) for making frozen yogurt, sherbet and ice cream, comprising:
a housing (16) having a counter top (12) with at least one aperture;
at least one heat exchanger vessel (30, 42, 52) positioned in said aperture for rotation therein, said vessel (30, 42, 52) comprising coupling means (38a) at its exterior bottom (46), and the interior bottom (55) of the vessel (30, 42, 52) comprising adjacent curved U-shaped troughs (36a, 36b) having a center peak (38) between them;
a cooling medium within the housing (16) surrounding the vessel (30, 42, 52);
a motor (48) for coupling to said coupling means (38a) and for rotating the vessel (30, 42, 52) within the housing (16); and
a single scraper blade (35) fixedly mounted on the housing (16) and extending into the vessel (30, 42, 52);
**characterized**
**in that** the scraper blade (35) has a J shape with a straight vertical portion thereof (51, 64) extending into the vessel (30, 42, 52) alongside a wall (56, 58) of the vessel (30, 42, 52); and a bottom portion (53) of the scraper blade (35) curves and ends along the interior bottom (55) of the vessel (30, 42, 52) as the curvature of the bottom trough (36a, 36b), and
**in that** the straight vertical portion (51, 64) of the scraper blade (35) has an irregular triangular cross section and the bottom curved portion (53) of the scraper blade (35) has a right trapezoidal cross section.

2. Apparatus according to claim 1, wherein the vessel (30, 42, 52) comprises a cup having a lip and baffles (57) or flanges around the outer wall of the cup to provide a large outer surface area for improved heat exchange.

3. Apparatus according to claim 1 or claim 2, wherein the vessel (30, 42, 52) comprises a cup having a lip from which extends a wall, wherein the lower 1/2 to 3/4 of the wall has a thickness of about 2 to 4 mm to improve heat exchange.

4. Apparatus according to any one of the preceding claims, wherein the vessel (30, 42, 52) comprises a removable liner.

5. Apparatus according to any one of the preceding claims, wherein the scraper blade (35) is made from stainless steel, copper zinc alloys, or engineering plastic.

6. Apparatus according to any one of the preceding claims, wherein the scraper blade (35) is made from engineering plastic and optionally with a metal insert to assure rigidity.

7. Apparatus according to any one of the preceding claims, comprising between 1 to 10 vessels (30, 42, 52) with scraper blades (35) having capacities of 1/4 to 2 liters.

8. Apparatus according to claim 7, comprising 1 to 2 vessels (30, 42, 52).

9. A method of preparing yogurt, sherbet or ice cream, comprising:
providing an apparatus (14) according to any one of the preceding claims,
providing means to cool the vessel (30, 42, 52),
cooling the outside of the vessel (30, 42, 52) to a temperature between - 10°C and -30°C, preferably to -20°C, to maintain an interior vessel temperature of about -5°C,
introducing into the vessel (30, 42, 52) the desired ingredients,
activating the motor (48) to rotate the vessel (30, 42, 52) at a speed of between 20 and 300 rpm to cool, mix and aerate the contents of the vessel (30, 42, 52), and
retrieving the freshly prepared yogurt, sherbet or ice cream from the vessel (30, 42, 52).

10. Method as according to claim 9, wherein the freshly prepared yogurt, sherbet or ice cream is retrieved from the vessel (30, 42, 52) on a spoon, spatula or stick introduced into the vessel (30, 42, 52) opposite the scraper blade (35), by catching the fresh yogurt, sherbet or ice cream as it builds up and removing same from the vessel (30, 42, 52) while it is still rotating, to recover a thick layer of fresh yogurt, sherbet or ice cream with an overrun of 20 - 40%.

11. Method according to claim 9 or claim 10, wherein the freshly prepared yogurt, sherbet or ice cream is retrieved after the rotation of the vessel (30, 42, 52) has slowed down or stopped completely.

12. A scraper (31, 60) configured to be used in an apparatus (14) according to any one of claims 1 to 8, the scraper (31, 60) comprising a blade support (33) adapted for mounting on the counter top (12) of the housing (16) of the apparatus (14) and a blade (35) extending from the blade support (33) and having a J shape with a straight vertical portion (51, 64) configured to extend into the vessel (30, 42, 52) of the apparatus (14) alongside a wall (56, 58) of the vessel (30, 42, 52) and a bottom curved portion (53, 66) configured to conform to the curvature of the bottom trough (36a, 36b) of the vessel (30, 42, 52), wherein the straight vertical portion (51, 64) of the blade (35) has an irregular triangular cross section and the bottom portion (53, 66) of the blade (35) has a right trapezoidal cross section.

## Patentansprüche

1. Vorrichtung (14) zur Herstellung von gefrorenem Joghurt, Sorbet und Speiseeis, umfassend:
ein Gehäuse (16), das ein Tischoberteil (12) mit zumindest einer Öffnung aufweist;
zumindest einen Wärmeaustauschkessel (30,42,52), der in der Öffnung angeordnet ist, um darin gedreht zu werden, wobei der Kessel (30, 42,52) Kupplungsmittel (38a) an seinem Außenboden (46) umfasst, und der Innenboden (55) des Kessels (30, 42, 52) benachbarte gekrümmte U-förmige Tröge (36a, 36b) mit einer zwischen ihnen liegenden zentralen Erhebung (38) umfasst;
einem Kühlmedium innerhalb des Gehäuses (16), das den Kessel (30, 42, 52) umgibt;
einem Motor (48) zum Kuppeln der Kupplungsmittel (38a) und zum Drehen des Kessels (30, 42, 52) innerhalb des Gehäuses (16); und
einer einzelnen Schaberklinge (35), die fest an dem Gehäuse (16) angebracht ist, und sich in den Kessel (30, 42, 52) erstreckt;
**dadurch gekennzeichnet,**
**dass** die Schaberklinge (35) eine J-Form mit einem geraden vertikalen Abschnitt (51, 64) davon aufweist, der sich in den Kessel (30, 42, 52) entlang einer Wand (56, 58) des Kessels (30, 42, 52) erstreckt; und sich ein unterer Abschnitt (53) der Schaberklinge (35) mit der Krümmung des Trogbodens (36a, 36b) krümmt und entlang des Innenbodens (55) des Kessels (30, 42, 52) endet, und
**dass** der gerade vertikale Abschnitt (51, 64) der Schaberklinge (35) einen unregelmäßigen dreieckigen Querschnitt aufweist, und der untere gekrümmte Abschnitt (53) der Schaberklinge (35) einen entsprechenden trapezförmigen Querschnitt aufweist.

2. Vorrichtung nach Anspruch 1, wobei der Kessel (30, 42, 52) eine Kalotte mit einer Lippe und Leitplatten (57) oder Flanschen um die Außenwand der Kalotte herum umfasst, um eine große äußere Oberfläche für einen verbesserten Wärmeaustausch bereit zu stellen.

3. Vorrichtung nach Anspruch 1 oder 2, wobei der Kessel (30, 42, 52) eine Kalotte mit einer Lippe von der sich eine Wand erstreckt, umfasst, wobei die untere Hälfte bis Dreiviertel der Wand eine Dicke von etwa 2 bis 4 mm aufweist, um den Wärmeaustausch zu verbessern.

4. Vorrichtung nach einem der vorhergehenden Ansprüche, wobei der Kessel (30, 42, 52) eine entfernbare Auskleidung umfasst.

5. Vorrichtung nach einem der vorhergehenden Ansprüche, wobei die Schaberklinge (35) aus rostfreiem Stahl, Kupfer-Zink-Legierungen, oder technischem Kunststoff gefertigt ist.

6. Vorrichtung nach einem der vorhergehenden Ansprüche, wobei die Schaberklinge (35) aus technischem Kunststoff und wahlweise mit einer metallischen Einlage gefertigt ist, um Steifigkeit sicherzustellen.

7. Vorrichtung nach einem der vorstehenden Ansprüche, umfassend zwischen 1 bis 10 Kessel (30, 42, 52) mit Schaberklingen (35), die Kapazitäten von ¼ bis 2 Liter haben.

8. Vorrichtung nach Anspruch 7, umfassend 1 bis 2 Kessel (30, 42, 52).

9. Verfahren zum Herstellen von Joghurt, Sorbet oder Speiseeis, umfassend:
Bereitstellen einer Vorrichtung (14) nach einem der vorstehenden Ansprüche,
Bereitstellen von Mitteln, um den Kessel (30, 42, 52) zu kühlen,
Kühlen der Außenseite des Kessels (30, 42, 52) auf eine Temperatur zwischen -10 °C und -30 °C, bevorzugt auf -20 °C, um eine Kesselinnentemperatur von etwa -5 °C aufrecht zu erhalten,
Einbringen der gewünschten Inhaltsstoffe in den Kessel (30, 42, 52),
Aktivieren des Motors (48), um den Kessel (30, 42, 52) bei einer Geschwindigkeit von zwischen 20 und 300 U/min zu drehen und die Inhalte des Kessels (30, 42, 52) zu kühlen, zu mischen und zu belüften, und
Herausholen des frisch hergestellten Joghurts, Sorbets oder Speiseeises aus dem Kessel (30, 42, 52).

10. Verfahren nach Anspruch 9, wobei der frisch hergestellte Joghurt, Sorbet oder Speiseeis aus dem Kessel (30, 42, 52) auf einem Löffel, Spatel oder Stiel herausgeholt wird, die in den Kessel (30, 42, 52) gegenüber der Schaberklinge (35) eingeführt werden, durch Aufnehmen des frischen Joghurts, Sorbets oder Speiseeises sobald es sich bildet, und Entfernen desselbigen aus dem Kessel (30, 42, 52) während er sich noch dreht, um eine dicke Schicht an frischem Joghurt, Sorbet oder Speiseeis mit einem Überschuss von 20 - 40 % wieder zu gewinnen.

11. Verfahren nach Anspruch 9 oder 10, wobei der frisch hergestellte Joghurt, Sorbet oder Speiseeis herausgeholt wird, nachdem sich die Rotation des Kessels (30, 42, 52) verlangsamt oder vollständig angehalten hat.

12. Schaber (31, 60), der ausgebildet ist, um in einer Vorrichtung (14) nach einem der Ansprüche 1 bis 8 verwendet zu werden, wobei der Schaber (31, 60) einen Klingenträger (33) umfasst, der dazu angepasst ist, um an dem Tischoberteil (12) des Gehäuses (16) der Vorrichtung (14) angebracht zu werden, und eine Klinge (35) umfasst, die sich von dem Klingenträger (33) erstreckt, und eine J-Form mit einem geraden vertikalen Abschnitt (51, 64) aufweist, der ausgebildet ist, um sich in den Kessel (30, 42, 52) der Vorrichtung (14) längsseits einer Wand (56, 58) des Kessels (30, 42, 52) zu erstrecken, und mit einem unteren gekrümmten Abschnitt (53, 66), der ausgebildet ist, um der Krümmung des Trogbodens (36a, 36b) des Kessels (30, 42, 52) zu folgen, wobei der gerade vertikale Abschnitt (51, 64) der Klinge (35) einen unregelmäßigen dreieckigen Querschnitt aufweist, und der untere Abschnitt (53, 66) der Klinge (35) einen entsprechenden trapezförmigen Querschnitt aufweist.

## Revendications

1. Appareil (14) pour fabriquer du yaourt glacé, du sorbet et de la glace, comprenant :
un logement (16) ayant un plan de travail (12) avec au moins une ouverture ;
au moins un récipient d'échange de chaleur (30, 42, 52) positionné dans ladite ouverture pour tourner dans celle-ci, ledit récipient (30, 42, 52) comprenant des moyens de couplage (38a) au niveau de son fond extérieur (46), et le fond intérieur (55) du récipient (30, 42, 52) comprenant des cuvettes en U incurvées adjacentes (36a, 36b) ayant un pic central (38) entre elles ;
un milieu de refroidissement à l'intérieur du logement (16) entourant le récipient (30, 42, 52) ;
un moteur (48) pour assurer le couplage auxdits moyens de couplage (38a) et pour faire tourner le récipient (30, 42, 52) à l'intérieur du logement (16) ; et
une seule lame de raclage (35) montée fixement sur le logement (16) et s'étendant dans le récipient (30, 42, 52) ;
**caractérisé**
**en ce que** la lame de raclage (35) a une forme en J avec une partie verticale rectiligne (51, 64) de celle-ci s'étendant dans le récipient (30, 42, 52) parallèlement à une paroi (56, 58) du récipient (30, 42, 52) ; et une partie inférieure (53) de la lame de raclage (35) s'incurve et se termine le long du fond intérieur (55) du récipient (30, 42, 52) comme la courbure de la cuvette inférieure (36a, 36b), et
**en ce que** la partie verticale rectiligne (51, 64) de la lame de raclage (35) a une section transversale triangulaire irrégulière et la partie incurvée inférieure (53) de la lame de raclage (35) a une section transversale trapézoïdale droite.

2. Appareil selon la revendication 1, dans lequel le récipient (30, 42, 52) comprend une coupelle ayant une lèvre et des déflecteurs (57) ou des rebords autour de la paroi externe de la coupelle pour fournir une large surface externe pour un meilleur échange de chaleur.

3. Appareil selon la revendication 1 ou la revendication 2, dans lequel le récipient (30, 42, 52) comprend une coupelle ayant une lèvre qui prolonge une paroi, dans lequel la ½ au ¾ inférieur de la paroi a une épaisseur d'environ 2 à 4 mm pour améliorer l'échange de chaleur.

4. Appareil selon l'une quelconque des revendications précédentes, dans lequel le récipient (30, 42, 52) comprend un revêtement amovible.

5. Appareil selon l'une quelconque des revendications précédentes, dans lequel la lame de raclage (35) est constituée d'acier inoxydable, d'alliages de cuivre et de zinc ou de plastique technique.

6. Appareil selon l'une quelconque des revendications précédentes, dans lequel la lame de raclage (35) est constituée de plastique technique et éventuellement d'un insert métallique pour assurer la rigidité.

7. Appareil selon l'une quelconque des revendications précédentes, comprenant de 1 à 10 récipients (30, 42, 52) avec des lames de raclage (35) ayant des capacités de ¼ de litre à 2 litres.

8. Appareil selon la revendication 7, comprenant 1 à 2 récipients (30, 42, 52).

9. Procédé de préparation de yaourt, sorbet ou glace, comprenant :
la fourniture d'un appareil (14) selon l'une quelconque des revendications précédentes,
la fourniture de moyens pour refroidir le récipient (30, 42, 52),
le refroidissement de l'extérieur du récipient (30, 42, 52) à une température entre -10 °C et -30 °C, de préférence à -20 °C, pour conserver une température de récipient intérieur d'environ -5 °C,
l'introduction dans le récipient (30, 42, 52) des ingrédients souhaités,
l'activation du moteur (48) pour faire tourner le récipient (30, 42, 52) à une vitesse comprise entre 20 et 300 trs/min pour refroidir, mélanger et aérer le contenu du récipient (30, 42, 52), et
la récupération du yaourt, du sorbet ou de la glace fraîchement préparé(e) à partir du récipient (30, 42, 52).

10. Procédé selon la revendication 9, dans lequel le yaourt, le sorbet ou la glace fraîchement préparé(e) est récupéré(e) du récipient (30, 42, 52) sur une cuillère, une spatule ou un bâtonnet introduit dans le récipient (30, 42, 52) à l'opposé de la lame de raclage (35), en attrapant le yaourt, le sorbet ou la glace frais/fraîche lorsqu'il/elle se forme et en le/la retirant du récipient (30, 42, 52) alors qu'il continue de tourner, pour extraire une couche épaisse de yaourt, sorbet ou glace frais/fraiche avec un dépassement de 20 à 40%.

11. Procédé selon la revendication 9 ou la revendication 10, dans lequel le yaourt, le sorbet ou la glace fraîchement préparé(e) est récupéré(e) une fois que la rotation du récipient (30, 42, 52) a ralenti ou est complètement arrêtée.

12. Racloir (31, 60) configuré pour être utilisé dans l'appareil (14) selon l'une quelconque des revendications 1 à 8, le racloir (31, 60) comprenant un support de lame (33) adapté pour être monté sur le plan de travail (12) du logement (16) de l'appareil (14) et une lame (35) s'étendant à partir du support de lame (33) et ayant une forme en J avec une partie verticale rectiligne (51, 54) configurée pour s'étendre dans le récipient (30, 42, 52) de l'appareil (14) parallèlement à une paroi (56, 58) du récipient (30, 42, 52) et une partie incurvée inférieure (53, 66) configurée pour se conformer à la courbure de la cuvette inférieure (36a, 36b) du récipient (30, 42, 52), dans lequel la partie verticale rectiligne (51, 64) de la lame (35) a une section transversale triangulaire irrégulière et la partie inférieure (53, 66) de la lame (35) a une section transversale trapézoïdale droite.
